# EUROPÄISCHE PATENTSCHRIFT

(11) **EP 1 663 621 B1**
(45) Veröffentlichungstag und Bekanntmachung des Hinweises auf die Patenterteilung: **17.01.2007**
(21) Anmeldenummer: 04764757.3
(22) Anmeldetag: 02.09.2004
(51) Int. Cl.: B29C 65/14, B29C 65/16

(54) **VERFAHREN ZUM VERBINDEN EINER SCHICHT AUS THERMOPLASTISCHEM POLYMER MIT DER OBERFLÄCHE EINES ELASTOMERS**
METHOD FOR CONNECTING A LAYER OF A THERMOPLASTIC POLYMER TO THE SURFACE OF AN ELASTOMER
MÉTHODE POUR CONNECTER UNE COUCHE DE POLYMÈRE THERMOPLASTIQUE À LA SURFACE D'UN ÉLASTOMÈRE

(43) Veröffentlichungstag der Anmeldung: 07.06.2006
(73) Patentinhaber: Hellermann Tyton GmbH, 25436 Tornesch (DE)
(72) Erfinder: BOYWITZ, Axel, 22846 Norderstedt (DE); MICHEL, Marco, 22549 Hamburg (DE)
(74) Vertreter: Glawe, Delfs, Moll
(86) Internationale Anmeldenummer: PCT/EP2004/009799
(87) Internationale Veröffentlichungsnummer: WO 2006/024316

(56) Entgegenhaltungen:
- HAENSCH D ET AL: "HARTE UND WEICHE KUNSTSTOFFE MIT DIODENLASER VERBINDEN. JOINING HARD AND SOFT PLASTICS WITH A DIODE LASER" KUNSTSTOFFE, CARL HANSER VERLAG. MUNCHEN, DE, Bd. 88, Nr. 2, Februar 1998 (1998-02), Seiten 210-212, XP000732887 ISSN: 0023-5563
- BOBBYE BAYLIS, YING PING HUANG, DAN WATT: "Welding thermoplastic elastomers to polypropylene with a diode laser" PROC. ICALEO 2002, 2002, XP009046528
- BOBBYE BAYLIS, RAJESH PRABHAKARAN, PHILIP BATES, YING PING HUANG, SUZANNE XIAOQUN XU, DAN WATT: "Pyrometer measurements during laser welding of thermoplastic elastomers to polypropylene and of nylon to itself" ANTEC, 2003, XP002325211
- CHUNG-YUAN WU, D. MARK DOUGLASS: "Fiber laser welding of elastomer to TPO" ANTEC, 2004, XP002325212

## Beschreibung

Elastomere Werkstoffe, die nicht thermoplastisch sind, lassen sich nicht mit Thermoplasten verschweißen. Man verbindet sie deshalb bislang in der Regel durch Verklebung. Dies ist aufwendig und wegen der Verwendung von Lösungsmitteln umwelttechnisch unerwünscht. Auch sind manche Thermoplasten einer Verklebung schwer zugänglich, beispielsweise Polyethylen.

Es ist bekannt (EP-B-0751865, DE-A-3621030, EP-A-159169, EP-A-483569, US-A-5279693, FR-A-1506163, WO 89/10832), zwei thermoplastische Teile durch Laserstrahlen zu verbinden, für die der obere der beiden Teile durchlässig ist und die im Bereich der Schweißfuge absorbiert werden. Durch die Absorption in einem thermoplastischen Material wird dieses schmelzflüssig und vermag daher unmittelbar die Verschweißung mit der Gegenfläche zu bewirken. Dies gilt auch dann, wenn einer der beiden Teile aus einem thermoplastischen Elastomer besteht (Hänsch u.a., _{"}Harte und weiche Kunststoffe mit Diodenlaser verbinden" in Kunststoffe 1998, S. 210 - 212). Voraussetzung für eine verläßliche stoffschlüssige Verbindung ist dabei allerdings, daß die Polymeren miteinander mischbar sind, was gerade dann, wenn einer der beiden Teile aus einem Elastomer besteht, oft problematisch ist. Auch ergeben sich oft Schwierigkeiten dadurch, daß die Wärme in dem die Strahlung absorbierenden Teil nach hinten abfließt und daher nicht für die Schweißung zur Verfügung steht, so daß es zu Schweißfehlern kommt.

Die Erfindung befaßt sich speziell mit der Verbindung einer thermoplastischen Poymerschicht mit der Oberfläche eines Elastomers. Es liegt ihr die Aufgabe zugrunde, ein verläßliches Verbindungsverfahren zu schaffen, das ohne ein Klebmittel auskommt. Die erfindungsgemäße Lösung besteht in den Merkmalen des Anspruchs 1 und vorzugsweise denjenigen der Unteransprüche.

Das erfindungsgemäße Verfahren unterscheidet sich von dem zuletzt erörterten bekannten Verfahren dadurch, daß ein geschäumter Elastomer verwendet wird. Wenn die thermoplastische Schicht auf die damit zu verbindende Oberfläche gepreßt wird, wird durch die Wärmestrahlung, insbesondere Infrarotstrahlung, im wesentlichen nur die Oberfläche des Elastomers erhitzt. Daß dennoch eine gute Verbindung zustande kommt, liegt an der Besonderheit, daß der Elastomer infolge seiner Schäumung eine niedrige Wärmeleitfähigkeit hat und daher die in seiner Oberfläche umgesetzte Wärme nicht rasch nach hinten abfließen kann. Die Oberfläche des Elastomers kann daher so stark aufgeheizt werden, daß die dagegen gepreßte Oberfläche der thermoplastischen Schicht durch Wärmeleitung hinreichend verflüssigt wird, um mit der Oberfläche des Elastomers eine hinreichende Verbindung eingehen zu können. Um diesen Effekt zu erzielen, liegt die wärmeleitfähigkeit des Elastomers unmittelbar hinter seiner Oberfläche (d.h. in einem Abstand von der Oberfläche, der nicht größer als 0,5 mm, vorzugsweise nicht größer als 0,2 mm ist) zweckmäßigerweise unter 0,2 und weiter vorzugsweise unter 0,13 W/mK.

Besonders geeignet ist die Verwendung von Laserlicht im sichtbaren und nichtsichtbaren Bereich, beispielsweise mit einer Wellenlänge von 1064 nm.

Zwar ist die Erfindung auch dann anwendbar, wenn die Oberfläche des Elastomers von einer geschlossenen Haut gebildet wird. Bevorzugt wird jedoch eine offenporige Oberfläche, d.h. die Porosität des Elastomers erstreckt sich bis in die Oberfläche desselben. Zum einen wird dadurch die wärmeableitung aus dem Oberflächenbereich noch stärker gehemmt. Zum anderen wird dadurch die Möglichkeit geschaffen, daß Teile des an der Elastomeroberfläche schmelzflüssig gewordenen Thermoplasten unter dem Druck in die Poren gepreßt und darin verankert werden. Dies ergibt eine hervorragende Verbindung.

Damit von der unmittelbar erhitzten Elastomeroberfläche eine hinreichende Wärmemenge an die zu verflüssigende Thermoplastoberfläche abgegeben werden kann, muß die Elastomeroberfläche wesentlich höher erhitzt werden, als dies bei der Verschweißung zweier Thermoplasten der Fall ist. Es ist deshalb zweckmäßig, einen Elastomer zu verwenden, der ohne wesentliche Schädigung der Verbindungsfestigkeit kurzzeitig auf eine Temperatur von mindestens 30° oberhalb der Schmelztemperatur des damit gepaarten Thermoplasten erhitzt werden kann.

Geeignete Thermoplaste sind beispielsweise Polyamid (PA), Polybutylentherephtalat (PBT), Acrylnitrilbutadienstyrol (ABS). Die Schmelztemperatur kann um 250°C liegen.

Geeignete Elastomere sind beispielsweise Chloroprenkautschuk, Styrol-Butadienkautschuk (SBR), Nitril-ButadienKautschuk (NBR), Butyl-Kautschuk (IIRCIIR, BIIR). Wenn das spezifische Gewicht des geschäumten Materials zwischen etwa 150 und 210 kg/m³, vorzugsweise um 180 kg/m³ liegt, ist die Wärmeleitfähigkeit im allgemeinen niedrig genug, nämlich um 0,1 W/mK. Zweckmäßigerweise liegt die Erweichungstemperatur oberhalb 300°C und die Zersetzungstemperatur oberhalb 350°C.

Erfolgreich durchgeführt wurde das Verfahren beispielsweise folgendermaßen. Eine Folie aus Polyamid mit einer Dicke von 0,5 mm, einer Schmelztemperatur von etwa 260°C und Lasertransparenz bei einer Wellenlänge von 1064 nm wurde mit einem Preßdruck von 3 bis 5 N/mm² auf eine Schicht von Chloroprenkautschuk gepreßt. Zur Erhitzung wurde ein Nd-YAG-Laser mit einer Wellenlänge von 1064 nm und 150 W verwendet. Nach Abkühlung der betreffenden Stelle zeigt sich, daß die Teile mit hervorragender Qualität miteinander verbunden waren.

Auch andere Laser, beispielsweise Diodenlaser, Faserlaser oder Scheibenlaser können verwendet werden.

## Patentansprüche

1. Verfahren zum Verbinden einer Schicht aus thermoplastischem Polymer mit der Oberfläche eines Elastomers, bei dem die thermoplastische Schicht gegen die Oberfläche des Elastomers gepreßt wird, während diese durch Wärmestrahlung, für die die thermoplastische Schicht durchlässig und die Oberfläche des Elastomers absorbierend ist und die durch die thermoplastische Schicht hindurch eingestrahlt wird, erwärmt wird, **dadurch gekennzeichnet, daß** ein geschäumter Elastomer verwendet wird.

2. Verfahren nach Anspruch 1, **dadurch gekennzeichnet, daß** der Elastomer eine offenporige Oberfläche hat.

3. Verfahren nach Anspruch 1 oder 2, **dadurch gekennzeichnet, daß** die Wärmestrahlung von Laserlicht gebildet wird.

4. Verfahren nach Anspruch 1 oder 2, **gekennzeichnet durch** eine Wärmeleitfähigkeit des Elastomers unterhalb 0,2 W/mK.

## Claims

1. A method for bonding a layer of thermoplastic polymer to the surface of an elastomer, in which the thermoplastic layer is pressed against the surface of the elastomer, while the latter is heated by heat radiation, to which the thermoplastic layer is transparent and the surface of the elastomer absorbs and which is introduced by irradiation through the thermoplastic layer, **characterized in that** a foamed elastomer is used.

2. The method as claimed in claim 1, **characterized in that** the elastomer has an open-pore surface.

3. The method as claimed in claim 1 or 2, **characterized in that** the heat radiation is formed by laser light.

4. The method as claimed in claim 1 or 2, **characterized by** a thermal conductivity of the elastomer of less than 0.2 W/mK.

## Revendications

1. Procédé pour connecter une couche de polymère thermoplastique à la surface d'un élastomère, dans lequel la couche thermoplastique est pressée contre la surface de l'élastomère, alors que celle-ci est réchauffée par rayonnement de chaleur, pour lequel la couche thermoplastique est perméable et la surface de l'élastomère est absorbante et qui est envoyé à travers la couche thermoplastique, **caractérisé en ce qu'**un élastomère moussé est utilisé.

2. Procédé selon la revendication 1, **caractérisé en ce que** l'élastomère a une surface à pores ouverts.

3. Procédé selon la revendication 1 ou 2, **caractérisé en ce que** le rayonnement de chaleur est formé par de la lumière laser.

4. Procédé selon la revendication 1 ou 2, **caractérisé par** une conductibilité thermique de l'élastomère inférieure à 0,2 W / mK.
